# EUROPÄISCHE PATENTSCHRIFT

(11) **EP 0 682 565 B1**
(45) Veröffentlichungstag und Bekanntmachung des Hinweises auf die Patenterteilung: **23.04.1997**
(21) Anmeldenummer: 94906126.1
(22) Anmeldetag: 01.02.1994
(51) Int. Cl.: B03B 9/06, B03B 9/00, B01D 21/00

(54) **VORRICHTUNG ZUR AUFBEREITUNG VON SCHMUTZWASER MIT TRENNEINRICHTUNG FÜR ZUSCHLAGSTOFFE**
DEVICE WITH AN AGGREGATE SEPARATOR FOR THE TREATMENT OF DIRTY WATER
DISPOSITIF PERMETTANT DE TRAITER DES EAUX USEES ET COMPORTANT UN DISPOSITIF SEPARATEUR POUR LES AGREGATS

(30) Priorität: 06.02.1993 DE 9301654 U
(43) Veröffentlichungstag der Anmeldung: 22.11.1995
(73) Patentinhaber: Brenner, Horst, 71717 Beilstein (DE)
(72) Erfinder: Brenner, Horst, 71717 Beilstein (DE)
(74) Vertreter: Gleiss, Alf-Olav, Dr.jur. Dipl.-Ing.
(86) Internationale Anmeldenummer: DE9400095
(87) Internationale Veröffentlichungsnummer: WO9417917

(56) Entgegenhaltungen:
- EP-A- 0 062 339
- DE-A- 2 617 837
- DE-A- 2 846 973
- DE-A- 3 009 244
- DE-A- 3 027 503
- DE-U- 9 208 671
- BETONWERK + FERTIGTEIL-TECHNIK Bd. 49, Nr. 9 , September 1983 , WIESBADEN DE Seiten 569 - 573 RIKER: 'Neue Erkenntnisse bei der Aufbereitung von Rest- und Rückbeton'

## Beschreibung

### TECHNISCHES GEBIET

Die Erfindung betrifft eine Vorrichtung zur Aufbereitung von Schmutzwasser gemäß Oberbegriff des Anspruchs 1 bzw. ein Verfahren zur Aufbereitung von Schmutzwasser gemäß Oberbegriff des Anspruchs 15.

Aus Gründen des Umweltschutzes und insbesondere auch aus wirtschaftlichen Überlegungen heraus werden in verstärktem Maße Vorrichtungen zur Wiederaufbereitung von Restbeton verwendet. Benutzer sind sowohl betonverarbeitende als auch betontransportierende Betriebe. Mit solchen Vorrichtungen wird verhindert, daß Restmengen von Beton und/oder Zementschlämmen in die öffentliche Kanalisation gelangen oder mehr oder weniger planmäßig irgendwo auf den Baustellen abgekippt werden. Mit derartigen Vorrichtungen werden der im Restbeton enthaltene Sand und Kies zurückgewonnen und das mit dem Restbeton anfallende Zementschlamm-Wasser bei der Herstellung von neuem Beton mitverwendet und damit diese Stoffe dem Recycling zugeführt.

### STAND DER TECHNIK

Durch das DE-G 91 00 177 ist ein Auswaschtrog für Restbeton bekannt. Dieser Auswaschtrog dient zur Wiederaufbereitung von Restbeton. Der Trog besitzt eine Vorwasch- und eine Feinwaschkammer, die in Strömungsrichtung hintereinander in dem behälterartigen Gehäuse angeordnet sind. Gegen die Materialflußrichtung wird Frischwasser in den Trog eingeleitet, so daß optimale Waschergebnisse erzielt werden. Am Ende der Feinwaschkammer wird über ein Becherrad der aus dem Restbeton wiedergewonnene Sand und Kies kaskadenartig auf eine Förderschnecke umgeladen und aus dem Auswaschtrog heraustransportiert. Die Förderrinne dieser Förderschnecke besteht aus einem hoch verschleißfesten Kunststoff, so daß ein Verkanten von Sand- und Kiesbestandteilen zwischen dem eigentlichen Schneckenkörper und dem die Förderschnecke umgebenden Gehäuse und damit ein Verklemmen dieser Teile zwischen den einzelnen Bauteilen nicht möglich ist. Dadurch ist ein sicherer Transport der Sand- und Kiesbestandteile aus dem Auswaschtrog heraus möglich. Durch die Verwendung dieser Kunststoffbahn kann die Förderschnecke auch sehr geräuscharm betrieben werden.

Derartige Auswaschtröge sind aufgrund ihrer gesamten Konzeption insbesondere für Betriebe besonders geeignet, bei denen relativ viel Restbeton anfällt. Solche Betriebe sind beispielsweise Transportbetonwerke, wo in den Transportbetonfahrzeugen oftmals jeweils 1/4 Kubikmeter und mehr Restbeton zurückbleibt, wenn diese von ihren Fahrten in das Transportbetonwerk zurückkommen. Dadurch fällt im Laufe eines Tages relativ viel Restbeton an.

In wirtschaftlicher Hinsicht läßt sich ein derartiger Auswaschtrog nicht ganz so günstig betreiben, wenn im Verhältnis zum anfallenden Wasser wenig fester Restbeton anfällt. Solches trifft beispielsweise für Betonwerke zu. Dort ist der Anfall von mit Zementschlämmen verunreinigtem Wasser, das beispielsweise zu Reinigungszwecken beim Herstellen der einzelnen Betonchargen verwendet wird, im Verhältnis zu dem festen Restbetonanfall sehr groß. Der Einsatz von Auswaschtrögen der bekannten Art ist grundsätzlich möglich und bringt auch die technisch gewollten Vorteile, wie das Recyclen der im Restbeton vorhandenen Bestandteile, nur ist der investive Einsatz relativ hoch und der Betrieb derartiger Auswascheinrichtungen nicht besonders günstig.

Aus der DE-G 92 08 671 ist eine Vorrichtung der eingangs genannten Art bekannt geworden, die zur Aufbereitung von Schmutzwasser geeignet ist und die auch eine Trenneinrichtung für Zuschlagstoffe besitzt. Diese Vorrichtung besitzt ein Schmutzwasserbecken, in dem eine Einrichtung zum Umwälzen des jeweils vorhandenen Schmutzwassers in diesem Becken vorhanden ist. Oberhalb des in dem Schmutzwasserbecken vorhandenen Schmutzwassers ist eine Einfüllkammer für das mit Zuschlagstoffen versetzte Schmutzwasser vorhanden. Diese Vorrichtung eignet sich insbesondere für die Fertigteilindustrie, wo im Verhältnis zum anfallenden Restbeton regelmäßig sehr viel mehr Schmutzwasser anfällt. Als Schmutzwasser wird dabei das mit Zementschlämmen verunreinigte Wasser bezeichnet. Die in dem Restbeton vorhandenen Sand- und Kiesbestandteile werden nicht in diesem Schmutzwasserbecken gesammelt, sondern werden vorher aus der oberhalb des Schmutzwasserbeckens angeordneten Einfüllkammer mit Hilfe einer Austragvorrichtung ausgesondert. Eine derartige Austragvorrichtung kann beispielsweise ein Schneckenförderer sein, so wie er in der erwähnten G 92 08 671 dargestellt ist.

Das im Schmutzwasserbecken gesammelte Schmutzwasser kann bei dem Herstellen von Frischbeton mitverwendet werden. Allerdings ist es nach wie vor erforderlich, bei der Herstellung von Frischbeton noch zusätzlich sauberes Wasser mitzuverarbeiten. Dies hat zur Folge, daß in der Beton-Fertigteilindustrie nach wie vor eine große Menge an Frischwasser verbraucht wird. Dieses frische Wasser muß daher der Mischanlage zugeführt werden und wird bei der Betonherstellung verbraucht, trotz Vorhandensein von Schmutzwasser.

Aus der Druckschrift DE 28 46 973 A1 ist eine Vorrichtung zum Trennen und Aufbereiten von Abfallstoffen bekannt. Die Vorrichtung umfaßt einen von einer Trenneinrichtung beschickten Schlammsammelbehälter, aus dem eine Pumpe Material in einen Zyklon pumpt. Die vom Zyklon herausgetrennten Feinstoffe A fließen zurück zu der Trenneinrichtung, die herausgetrennten Feinstoffe B werden dagegen in ein nachgeordnetes Klärsilo eingeleitet. Dieses arbeitet nach dem Absetz-Prinzip, wobei die Feinstoffe B durch Sedimentation vom Wasser getrennt werden und sich im unteren Abschnitt des Klärsilos sammeln. Um Verbackungen in diesem Abschnitt zu verhindern, ist ein Rührwerk vorgesehen. Das gereinigte Wasser sammelt sich im oberen Abschnitt des Klarsilos, wo es dann entnommen werden kann.

Ein Nachteil dieser Vorrichtung ist darin zu sehen, daß neben der vorgeschalteten Trenneinrichtung ein Zyklon benutzt wird, was zu einer Verteuerung der gesamten Anlage führt. Darüber hinaus müssen chemische Mittel zur Ausflockung zugegeben werden, die die Umweltbelastung erhöhen und zusätzliche Kosten verursachen.

Ein weiterer Nachteil ist darin zu sehen, daß der Zyklonauslauf mindestens 1,75 m über dem maximalen Wasserspiegel im Klärsilo angeordnet sein muß, wodurch zusätzlicher Aufwand entsteht.

Der vorliegenden Erfindung liegt deshalb die Aufgabe zugrunde, eine Vorrichtung zur Aufbereitung von Restmaterial und Schmutzwasser sowie ein Verfahren zur Aufbereitung von Schmutzwasser anzugeben, mit der beziehungsweise mit dem die obengenannten Nachteile beseitigt werden und die beziehungsweise das insbesondere kostengünstig und auch bei einem großen diskontinuierlichen Anfall von Schmutzwasser ohne Chemie einsetzbar ist.

Diese Aufgabe wird durch eine Vorrichtung mit den Merkmalen des Anspruchs 1 beziehungsweise durch ein Verfahren mit den Merkmalen des Anspruchs 15 gelöst.

Die erfindungsgemäße Vorrichtung geht damit von der Erkenntnis aus, daß durch eine zusätzlich dem Schmutzwasserbecken nachgeschaltete Kläranlage das im Schmutzwasserbecken gesammelte Schmutzwasser derart weitergeklärt werden kann, daß es als sogenanntes Klarwasser in gleicher Weise wie Frischwasser bei der Betonherstellung und/oder bei sonstigen Verbrauchern oder zu Reinigungszwecken verwendet werden kann. Das im Schmutzwasserbecken vorhandene eingesammelte Schmutzwasser kann damit vollständig der Wiederverwertung auch in der Fertigteilindustrie, wo viel Frischwasser verbraucht wird, zugeführt werden.

Als vorteilhaft hatte sich herausgestellt, die nachgeschaltete Kläranlage in Form von Klärtürmen auszubilden. Die Kläranlage besteht dann aus zumindest einem Klärturm. In diesem Klärturm, der vorzugsweise oberirdisch in Form eines Silos ausgebildet ist, befindet sich eine Zwangsumleitung für das zu klärende Schmutzwasser derart, daß das eingeleitete Schmutzwasser nach unten durch den Klärturm hindurchströmen muß und dann erst vom unteren Bereich des Turms wieder nach oben aufströmen kann. Durch diese Umleitung des Schmutzwassers setzen sich die in dem Wasser vorhandenen Schmutzteilchen wie Zementteile und Feinsand unten im Silo ab. Darüber hinaus kann es sinnvoll sein, zusätzlich ein Rührwerk in dem Klärsilo anzubringen, damit keine Anbackungen im unteren Silokegel auftreten können und damit auch der untere Siloausfluß nicht verstopfen kann. Im oberen Bereich des Silos wird sich dann praktisch sauberes Klarwasser befinden. Dieses Klarwasser kann in gleicher wie Frischwasser bei der Herstellung von Beton verwendet werden. Außerdem ist es möglich, dieses Klarwasser auch zu Reinigungszwecken zu verwenden.

Als sinnvoll hat es sich herausgestellt, das sich im Klärturm oder in den Klärtürmen angesammelte Klarwasser in einem nachgeordnetem Wasserspeicher zu sammeln. Auf diese Weise kann dann Klarwasser problemlos auch in großen Mengen entnommen werden, ohne daß befürchtet werden müßte, daß die im unteren Bereich des Klärturms abgesetzten feinen Schmutzteilchen aufgewirbelt und damit das Klarwasser wieder verschmutzen würden.

Nach einer Weiterbildung der Erfindung ist niveaumäßig unterhalb des Klärturms ein weiterer Sammelbehälter vorhanden, der zur Aufnahme der im Klärturm abgesetzten feinen Schmutzteilchen dient. Die in dem Behälter dann eingesammelten Schmutzteile können über ein Rührwerk oder Knetwerk in Bewegung gehalten werden, so daß die Konsistenz der in dem Behälter einsitzenden mehr oder weniger breiigen Masse insgesamt gleichbleiben würde. Die im Behälter aufgerührte Masse aus Feinsand und Zement kann über eine Dickstoffpumpe dem Betonmischer als Ersatz für Zuschlagstoffe zugepumpt und somit ein vollständig geschlossener Materialkreislauf erzeugt werden. Falls die breiige Masse zu dick werden sollte, könnte Klarwasser aus dem Klärturm oder aus dem nachgeschalteten Wasserspeicher zugegeben werden.

Mit der erfindungsgemäßen Vorrichtung kann damit das Schmutzwasserbecken ausreichend weit von seinem Schmutzwasser befreit werden, so daß das Aufbereiten von Restbeton und/oder von mit Zuschlagstoffen versetztem Schmutzwasser zu jeder Zeit erfolgen kann. Das in dem Schmutzwasserbecken vorhandene Schmutzwasser kann nämlich entweder direkt der Mischanlage zum Herstellen von Beton zugegeben oder in den Klärturm eingepumpt werden. Dies hat dann den weiteren Vorteil, daß das in dem Klärturm gewonnene Klarwasser als Ersatz des sonst beim Herstellen von Beton benötigten Frischwassers benutzt werden kann. Dadurch wird die zum Herstellen von Beton ansonsten erforderliche Menge an Frischwasser wesentlich verkleinert.

Weitere Ausführungsformen und Vorteile der Erfindung ergeben sich durch die in den Ansprüchen ferner aufgeführten Merkmale sowie durch das nachstehend angegebene Ausführungsbeispiel. Die Merkmale der Ansprüche können beliebigerweise miteinander kombiniert werden, insoweit sie sich nicht offensichtlich gegenseitig ausschließen.

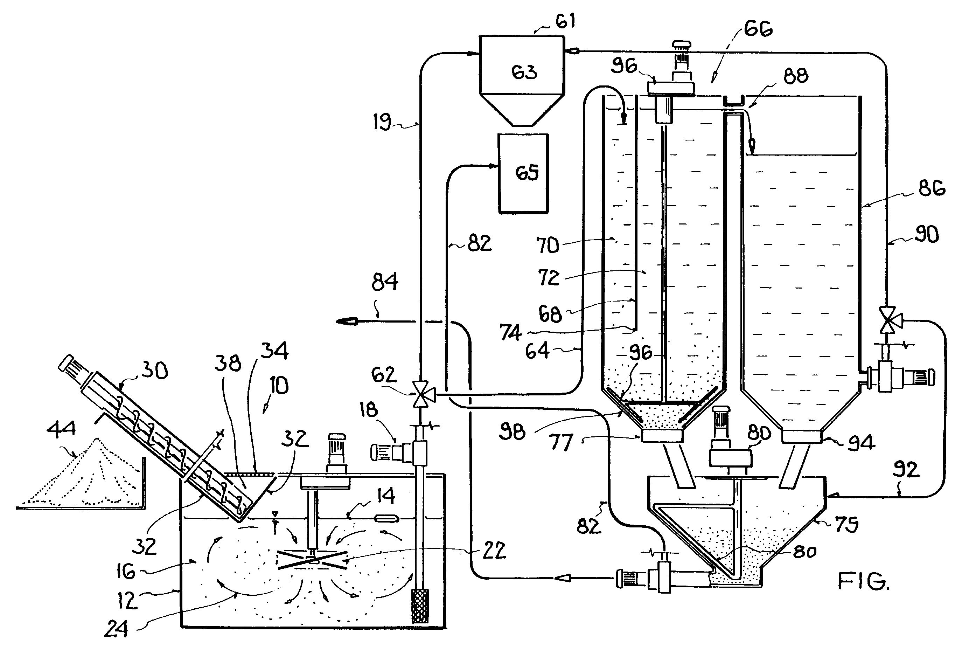

### KURZE BESCHREIBUNG DER ZEICHNUNG

Die Erfindung wird im folgenden anhand eines Ausführungsbeispiels näher beschrieben und erläutert. Die einzige Figur zeigt die schematische Anordnung einer Vorrichtung nach der Erfindung zur Aufbereitung von Schmutzwasser, die mit einer Trenneinrichtung für Zuschlagstoffe ausgestattet ist.

### WEGE ZUR AUSFÜHRUNG DER ERFINDUNG

Eine zur Wiederaufbereitung von mit Zuschlagstoffen versetztem Schmutzwasser verwendete Auswaschvorrichtung 10 weist ein sogenanntes Schmutzwasserbecken 12 auf. Dieses Becken 12 kann aus beliebigen Materialien hergestellt sein.

In dem Becken 12 ist bis zu einem Niveau 14 Schmutzwasser 16 vorhanden. Dieses Schmutzwasser 16 ist durch Zement und Feinsand verunreinigtes Wasser, das beim Herstellen von Beton in Mischanlagen oder beim Transportieren von Beton anfällt. Das Schmutzwasser 16 kann bei der Herstellung von Beton wiederverwendet und damit recycelt werden. Zu diesem Zweck wird das Schmutzwasser 16 von einer Pumpe 18, die auch eine Tauchpumpe sein kann, angesaugt und in eine beispielsweise zu einer Mischanlage 61 führenden Leitung 19 hineingedrückt.

Von oben ragt in das Becken 12 eine Austragvorrichtung 30 hinein, die auch räumlich getrennt zum Becken 12 angeordnet sein kann. Diese Austragvorrichtung 30 besitzt in ihrem unteren Bereich, mit dem sie in das Becken 12 hineinragt, boden- bzw. wandartige Trennwände 32. Diese Trennwände 32 sind innerhalb des Bereiches des Beckens 12 siebartig und damit wasserdurchlässig ausgebildet. Von oben sind die Trennwände 32 durch einen Rost 34 verbunden. Der von den Trennwänden 32 und dem Rost 34 umhüllte Innenraum 36 stellt eine Einfüllkammer 38 für die wiederaufzubereitenden Beton-Restmengen bzw. zementverunreinigten Wassermassen dar.Die Austragvorrichtung 30 in Gestalt eines Schneckenförderers stellt zusammen mit den Trennwänden 32 und dem Rost 34 die Trenneinrichtung für die Zuschlagstoffe dar.Die Trenneinrichtung könnte auch in Gestalt des im Stand der Technik bekannten Auswaschtroges ausgebildet werden.Das Becken 12 bildet dann gleichsam eine Pufferstation für stoßweise zuviel anfallendes Schmutzwasser.

Mit der Austragvorrichtung 30 können die in der Einfüllkammer 38 vorhandenen Zuschlagstoffe wie Sand und Kies aus dem Becken 12 herausgefördert werden. Die von der Austragvorrichtung 30 schließlich außerhalb des Beckens abfallenden Kies- und Sandmengen sind in der Zeichnung gestrichelt angedeutet und mit dem Bezugszeichen 44 versehen. Die in der Zeichnung dargestellte Austragvorrichtung ist vorzugsweise als Schneckenförderer ausgebildet, so wie dies beispielsweise in der G 92 08 671 erwähnt ist.

Das sich unterhalb der Einfüllkammer 38 der Austragvorrichtung 30 in dem Becken 12 befindliche Schmutzwasser 16 wird über ein in das Schmutzwasser 16 eintauchendes Rührwerk 22 in Bewegung gehalten. Von diesem Rührwerk 22 wird das Schmutzwasser 16 im vorliegenden Beispielsfall von oben nach unten in dem Becken 12 umgewälzt, so wie dies durch Pfeile 24 schematisiert dargestellt ist. Dadurch wird verhindert, daß sich die in dem Schmutzwasser 16 vorhandenen feinen Zementbestandteile an dem Boden bzw. an den Wänden des Beckens 12 festsetzen können. Statt des Rührwerks 22 kann auch jede andere geeignete Umwälzeinrichtung verwendet werden.

In der zur Mischanlage 61 wie z. B. der Mischerwaage 63 aus dem Becken 12 führenden Leitung 19 ist ein 3-Wege-Ventil 62 vorhanden, von dem eine Leitung 64 zu einem Klärturm 66 führt. Diese Leitung 64 ragt von oben in den Klärturm 66 hinein. Es ist allerdings auch möglich, die Leitung 64 direkt in das Becken 12 einmünden zu lassen. Dies würde dann eine zweite Pumpe erforderlich machen. Durch diese Pumpe könnte dann immer bei maximalem Wasserstand im Becken 12 Schmutzwasser in den Klärturm 66 abgezogen werden.

In dem Klärturm 66 ist eine Längswand 68 angeordnet, die sich von oben nach unten in dem Klärturm 66 erstreckt. Diese Längswand 68 könnte auch durch ein inneres Rohr (Dortmunder Brunnen) ersetzt werden. Die Längswand 68 verbindet gegenüberliegende Außenwandbereiche des Klärturms 66. Dadurch werden im Inneren des Klärturms 66 ein linker Bereich 70 und ein rechter Bereich 72 ausgebildet, die lediglich unten, da wo die Längswand 68 nicht mehr vorhanden ist, miteinander verbunden sind. Das in den Klärturm 66 durch die Leitung 64 einströmende Wasser muß daher durch den Bereich 70 nach unten hindurchströmen. Nach Passieren der unteren Kante 74 der Längswand 68 kann dann diese Flüssigkeit nach oben in den Bereich 72 strömen. Bei dieser Strömung scheiden sich die in dem Schmutzwasser vorhandenen Feinteile, die aus Zement und kleinen Feinsandteilchen bestehen, von dem Klarwasser ab und sammeln sich im unteren Bereich des Klärturms 66. Durch Öffnen eines auf der Unterseite des Klärturms vorhandenen beispielsweise Quetschventils 77 kann dann diese abgesetzte Flüssigkeitsmasse aus dem Klärturm 66 abgezogen und in einen nachgeordneten Behälter 75 eingefüllt werden. Diese abgezogene Masse wird eine mehr oder weniger breiige Konsistenz haben. Durch eine in dem nachgeschalteten Behälter 75 angeordnete Knetvorrichtung 80 wird diese breiige Konsistenz aufrechterhalten. Diese breiige Masse kann dann durch eine Leitung 82 dem unterhalb der Mischerwaage 63 angeordneten Mischer 65 portionsweise, falls gewünscht, zugegeben werden.

Die breiige Masse kann auch über eine andere Leitung 84 weggebracht werden.

Im vorliegenden Fall ist im Klärturm 66 noch ein Rührwerk 96 vorhanden, mit dem der untere Auslaufkegel 98 des Klärturms 66 von Anbackungen freigehalten werden kann.

Dem Klärturm 66 ist ein weiterer Turm 86 zugeordnet, der als Wasserspeicher dient. Dieser Wasserspeicher 86 wird über einen im Bereich 72 des Klärturms 66 oben vorhandenen Überlauf 88 mit Klarwasser gespeist. Dieses Klarwasser hat sich in dem Bereich 72 angesammelt. Aus dem Wasserspeicher 86 kann das Klarwasser sowohl über eine Leitung 90 als Ersatz von Frischwasser der Mischerwaage 61 zugeführt werden; andererseits kann über eine Leitung 92 dieses Klarwasser auch dem Behälter 75 zugeführt werden. Dies wäre beispielsweise sinnvoll, wenn sich die in dem Behälter 75 vorhandene breiige Konsistenz als zu fest herausstellen sollte.

In Fällen, wo beispielsweise farbiger Beton anfällt, besteht die Möglichkeit, den zweiten Turm ebenfalls als Klärturm zu verwenden. Jeder Turm würde dann zur Reinigung von jeweils einer Hauptfarbe zur Verfügung stehen.

Auch der Wasserspeicher 86 ist unten mit einer Entleeröffnung 94 versehen, die ebenso wie beim Klärturm 66 als Quetschventil ausgebildet sein kann.

Die in dem Behälter 75 vorhandene breiige Konsistenz kann als Ersatz von Zuschlagstoffen wie Sand oder Flugasche bei der Herstellung von Beton verwendet werden. Dies erfolgt, wie bereits ausgeführt, durch die Leitung 82 hindurch. Das in dem Wasserspeicher 86 angesammelte Klarwasser kann sowohl zum Herstellen von Beton als auch zum Spülen oder Reinigen, als Ersatz von Frischwasser, verwendet werden.

Verfahrenstechnisch hat es sich als sinnvoll herausgestellt, zumindest bei maximal gefülltem Schmutzwasserbecken 12 Schmutzwasser aus dem Becken 12 abzusaugen und durch die Leitung 64 in den Klärturm 66 einzuleiten. Auf diese Weise kann dann die Auswaschvorrichtung 10 ständig zur Verfügung stehen, da das bei Betrieb der Auswaschvorrichtung 10 anfallende Schmutzwasser jederzeit in dem Schmutzwasserbecken 12 aufgefangen werden kann.

## Patentansprüche

1. Vorrichtung zur Aufbereitung von Schmutzwasser, mit
einem Schmutzwasserbecken (12),
einer Einrichtung (22) zum Umwälzen des Schmutzwassers (16) in diesem Becken (12),
einer Einfüllkammer (38) für das mit Zuschlagstoffen (44) versetzte Schmutzwasser, und
einer Trenneinrichtung (30, 32, 34), die die Zuschlagstoffe (44) abtrennt,
**dadurch gekennzeichnet**,
daß zumindest eine nach dem Absetzprinzip arbeitende Kläranlage, vorzugsweise ein Klärturm (66) vorhanden ist, in die über eine Leitungsverbindung (64) das in dem Schmutzwasserbecken (12) vorhandene Schmutzwasser (16) bei Bedarf einleitbar ist, und
daß eine weitere Leitungsverbindung (90) zwischen dieser Kläranlage (66) und einer Betonmischanlage (61) vorhanden ist, so daß Schmutzwasser aus dem Schmutzwasserbecken (12) bei Bedarf zur Kläranlage (66) und von dort zur Betonmischanlage (61) leitbar ist.

2. Vorrichtung nach Anspruch 1,
**dadurch gekennzeichnet,** daß eine Leitungsverbindung (19) zwischen dem Schmutzwasserbecken (12) und der Mischanlage (61) vorhanden ist.

3. Vorrichtung nach Anspruch 1 oder 2,
**dadurch gekennzeichnet,** daß dem Klärturm (66) ein weiterer Behälter (75) nachgeordnet ist, in den der im unteren Bereich des Klärturms (66) vorhandene Inhalt des Klärturms einleitbar ist.

4. Vorrichtung nach Anspruch 3,
**dadurch gekennzeichnet,** daß in dem weiteren Behälter (75) eine Rühr- oder Kneteinrichtung (80) vorhanden ist, mit der der im Behälter (75) gesammelte Inhalt in einer gleichmäßigen breiigen Konsistenz haltbar ist.

5. Vorrichtung nach Anspruch 4,
**dadurch gekennzeichnet,** daß eine direkte Leitungsverbindung von diesem weiteren Behälter (75) zur Mischanlage (82) vorhanden ist.

6. Vorrichtung nach einem der vorstehenden Ansprüche,
**dadurch gekennzeichnet,** daß eine Leitungsverbindung (92) von diesem weiteren Behälter (75) in diejenige Leitungsverbindung (90) hinein vorhanden ist, die zwischen dem Klärturm (66) und der Mischanlage (61) vorhanden ist.

7. Vorrichtung nach einem der vorstehenden Ansprüche,
**dadurch gekennzeichnet,** daß dem Klärturm (66) ein Wasserspeicher (86) nachgeordnet ist, in den der im oberen Bereich des Klärturms vorhandene Inhalt einleitbar ist.

8. Vorrichtung nach Anspruch 7,
**dadurch gekennzeichnet,** daß der in dem oberen Bereich des Klärturms (66) vorhandene Inhalt über einen Überlauf (88) in den Wasserspeicher (86) einleitbar ist.

9. Vorrichtung nach Anspruch 7 oder 8,
**dadurch gekennzeichnet,** daß der Wasserspeicher (86) eine Leitungsverbindung (92) zu dem weiteren Behälter (75) besitzt.

10. Vorrichtung nach Anspruch 9,
**dadurch gekennzeichnet,** daß der Wasserspeicher (86) eine Leitungsverbindung (90) zu der Mischanlage (61) besitzt.

11. Vorrichtung nach einem der vorstehenden Ansprüche,
**dadurch gekennzeichnet,** daß eine Einrichtung (68) zur Zwangsumleitung des in den Klärturm (66) eingeleiteten Wassers vorhanden ist, mit der das Wasser in einem ersten Bereich (70) des Klärturms (66) von oben nach unten und in einem getrennten zweiten Bereich (72) des Klärturms (66) von unten nach oben jeweils durch den Klärturm hindurchleitbar ist.

12. Vorrichtung nach Anspruch 11,
**dadurch gekennzeichnet,** daß die Einrichtung zur Zwangsumleitung eine den Klärturm abschnittsweise querschnittsmäßig zerteilende Längswand (68) ist.

13. Vorrichtung nach Anspruch 11,
**dadurch gekennzeichnet,** daß die Einrichtung zur Zwangsumleitung ein im Inneren des Klärturms (66) vorhandenes unten offenes Rohr ist.

14. Vorrichtung nach einem der vorstehenden Ansprüche,
**dadurch gekennzeichnet,** daß in dem Klärturm (66) ein seinen unteren Bereich von Schmutzablagerungen freihaltendes Rührwerk (96) vorhanden ist.

15. Verfahren zur Aufbereitung von Schmutzwasser, mit den Schritten:
Einleiten von mit Zuschlagstoffen versetztem Schmutzwasser in eine Einfüllkammer (38),
Abtrennen der Zuschlagstoffe mittels einer Trenneinrichtung (30, 32, 34),
Auffangen und Sammeln des Schmutzwassers in einem Schmutzwasserbecken (12), wobei das Schmutzwasser umgewälzt wird,
**dadurch gekennzeichnet**,
daß das Schmutzwasser aus dem Schmutzwasserbecken (12) bei Bedarf über eine Leitungsverbindung (64) in eine nach dem Absetzprinzip arbeitende Kläranlage, vorzugsweise einen Klärturm (66) und danach über eine weitere Leitungsverbindung (90) der Betonmischanlage (61) zugeleitet wird.

## Claims

1. A device for treating dirty water, having
a dirty water basin (12),
an appliance (22) for circulating the dirty water (16) in this basin (12),
a feed chamber (38) for the dirty water mixed with aggregates (44), and
a separating device (30, 32, 34) which separates off the aggregates (44),
characterised in that at least one clarifying installation operating in accordance with the sedimentation principle is present, preferably a clarifying tower (66), into which the dirty water (16) present in the dirty water basin (12) can be introduced via a conduit connection (64) when required, and
in that there is a additional conduit connection (90) between this clarifying installation (66) and a concrete mixing installation (61), so that dirty water from the dirty water basin (12) can when required be conducted to the clarifying installation (66) and from there to the concrete mixing installation (61).

2. A device in accordance with Claim 1, characterised in that there is a conduit connection (19) between the dirty water basin (12) ad the mixing installation (61).

3. A device in accordance with Claim 1 or 2, characterised in that another container (75) is arranged subsequent to the clarifying tower (66) and the clarifying tower contents present in the lower region thereof can be introduced into this container (75).

4. A device in accordance with Claim 3, characterised in that in the additional container (75) there is a agitating or kneading appliance (80) by means of which the contents collected in the container (75) can be kept at a uniform, slurry-like consistency.

5. A device in accordance with Claim 4, characterised in that there is a direct conduit connection from this additional container (75) to the mixing installation (82).

6. A device in accordance with ay one of the preceding Claims, characterised in that there is a conduit connection (92) from this additional container (75) into that conduit connection (90) which is present between the clarifying tower (66) and the mixing installation (61).

7. A device in accordance with any one of the preceding Claims, characterised in that a water reservoir (86) is arranged subsequent to the clarifying tower (66) and the contents present in the upper region of the clarifying tower can be introduced into this water reservoir (86).

8. A device in accordance with Claim 7, characterised in that the contents present in the upper region of the clarifying tower (66) can be introduced into the water reservoir (86) via an overflow (88).

9. A device in accordance with Claim 7 or 8, characterised in that the water reservoir (86) has a conduit connection (92) to the additional container (75).

10. A device in accordance with Claim 9, characterised in that the water reservoir (86) has a conduit connection (90) to the mixing installation (61).

11. A device in accordance with any one of the preceding Claims, characterised in that there is a means (68) for forced deflection of the water introduced into the clarifying tower (66), the water in a first region (70) of the clarifying tower (66) being conductable through the clarifying tower from the top to the bottom by this means (68) ad the water in a separate second region (72) of the clarifying tower (66) being conductable through the clarifying tower from the bottom to the top by this means (68).

12. A device in accordance with Claim 11, characterised in that the means for forced deflection is a longitudinal wall (68) cross-sectionally dividing the clarifying tower into sections.

13. A device in accordance with Claim 11, characterised in that the means for forced deflection is a downwardly open pipe present in the interior of the clarifying tower (66).

14. A device in accordance with any one of the preceding Claims, characterised in that in the clarifying tower (66) there is a agitator (96) keeping its lower region free from dirt deposits.

15. A method of treating dirty water, comprising the steps of:
the introduction of dirty water mixed with aggregates into a feed chamber (38),
the separation off of the aggregates by means of a separating device (30, 32, 34), the receiving ad collection of the dirty water in a dirty water basin (12), the dirty water being circulated,
characterised in that the dirty water from the dirty water basin (12) is when required fed via a conduit connection (64) into a clarifying installation operating in accordance with the sedimentation principle, preferably a clarifying tower (66), ad then via an additional conduit connection (90) to the concrete mixing installation (61).

## Revendications

1. Dispositif de traitement d'eaux usées, comportant :
- un réservoir d'eau usée (12),
- un dispositif (22) pour faire circuler l'eau usée (16) dans ce réservoir (12),
- une chambre de remplissage (38) pour l'eau usée mélangée avec les agrégats (44), et
- un dispositif séparateur (30, 32, 34) qui sépare les agrégats (44),
caractérisé en ce qu'
au moins une installation de décantation travaillant selon le principe de sédimentation, de préférence une tour de décantation (66) est présente, dans laquelle par un raccordement de conduite (64) on peut introduire selon le besoin l'eau usée (16) existant dans le réservoir d'eau usée (12) et,
un autre raccordement de conduite (90) existe entre cette installation de décantation (66) et une installation pour mélanger le béton (61) de sorte que l'eau usée (12) peut, si besoin est, être emmenée à l'installation de décantation (66) et de là à l'installation pour mélanger le béton (61).

2. Dispositif selon la revendication 1,
caractérisé en ce qu'
une conduite de liaison (19) est prévue entre le réservoir d'eau usée (12) et l'installation de mélange (61).

3. Dispositif selon les revendications 1 ou 2,
caractérisé en ce qu'
à la suite de la tour de décantation (66) est placé un autre réservoir (75) dans lequel on peut introduire le contenu de la tour de décantation existant à la base de la tour de décantation (66).

4. Dispositif selon la revendication 3,
caractérisé en ce que
dans l'autre réservoir (75) existe un dispositif agitateur et de malaxage (80), avec lequel le contenu recueilli dans le réservoir (75) est maintenu dans une consistance homogène de coulis.

5. Dispositif selon la revendication 4,
caractérisé en ce qu'
une conduite de liaison directe (82) est prévue depuis cet autre réservoir (75) vers l'installation de mélange.

6. Dispositif selon une des revendications précédentes,
caractérisé en ce qu'
une conduite de liaison (92) est prévue de cet autre réservoir (75) à la conduite de liaison (90), qui se développe entre la tour de décantation (66) et l'installation de mélange (61).

7. Dispositif selon une des revendications précédentes,
caractérisé en ce qu'
à la tour de décantation (66) fait suite un réservoir d'eau (86), dans lequel on peut introduire le contenu existant à la partie supérieure de la tour de décantation.

8. Dispositif selon la revendication 7,
caractérisé en ce que
le contenu existant à la partie supérieure de la tour de décantation (66) peut être introduit par un trop-plein (88) dans le réservoir d'eau (86).

9. Dispositif selon les revendications 7 ou 8,
caractérisé en ce que
le réservoir d'eau (86) possède une conduite de liaison (92) avec l'autre réservoir (75).

10. Dispositif selon la revendication 9,
caractérisé en ce que
le réservoir d'eau (86) possède une conduite de liaison (90) avec l'installation de mélange (61).

11. Dispositif selon une des revendications précédentes,
caractérisé en ce qu'
il existe un dispositif (68) pour la déviation forcée de l'eau introduite dans la tour de décantation (66), par laquelle l'eau peut être guidée à travers la tour de décantation respectivement dans une première zone (70) de la tour de décantation (66) du haut vers le bas et dans une deuxième zone séparée (72) de la tour de décantation (66) du bas vers le haut.

12. Dispositif selon la revendication 11,
caractérisé en ce que
le dispositif de déviation forcée est une paroi longitudinale (68) divisant en zones la tour de décantation selon une coupe transversale.

13. Dispositif selon la revendication 11,
caractérisé en ce que
le dispositif de déviation forcée est un tube ouvert en bas prévu à l'intérieur de la tour de décantation (66).

14. Dispositif selon une des revendications précédentes,
caractérisé en ce qu'
il est prévu dans la tour de décantation (66) un agitateur (96) tenant sa zone inférieure dégagée des dépôts de saleté.

15. Procédé de traitement des eaux usées comportant les étapes :
- Introduction d'eaux usées mélangées avec des agrégats dans une chambre de remplissage (38),
- séparation des agrégats au moyen d'un dispositif de séparation (30, 32, 34),
- captage et réunion de l'eau usée dans un réservoir d'eau usée (12), tandis que l'eau usée est mise en circulation,
caractérisé en ce que
l'eau usée provenant du réservoir d'eau usée (12) est envoyée si besoin est, par une conduite de liaison (64) dans une installation de décantation travaillant selon le principe du dépôt, de préférence une tour de décantation (66) et ensuite par une autre conduite de liaison (90) à l'installation pour le mélange du béton (61).
